(19) Europäisches Patentamt
European Patent Office
Office européen des brevets

(11) Veröffentlichungsnummer: **0 174 551**
**B1**

(12) # EUROPÄISCHE PATENTSCHRIFT

(45) Veröffentlichungstag der Patentschrift: **25.04.90**

(21) Anmeldenummer: **85110785.4**

(22) Anmeldetag: **28.08.85**

(51) Int. Cl.$^5$: **C 08 C 19/02,** C 08 L 9/02 // (C08L9/02, 15:00)

(54) **Niedermolekulare Copolymerisate und daraus hergestellte Covulkanisate.**

(30) Priorität: **08.09.84 DE 3433075**

(43) Veröffentlichungstag der Anmeldung: **19.03.86 Patentblatt 86/12**

(45) Bekanntmachung des Hinweises auf die Patenterteilung: **25.04.90 Patentblatt 90/17**

(84) Benannte Vertragsstaaten: **DE FR GB IT**

(56) Entgegenhaltungen:
**DE-A-3 229 871**
**FR-A-1 176 572**
**US-A-3 629 172**
**US-A-3 700 637**

(73) Patentinhaber: **BAYER AG**
**D-5090 Leverkusen 1 Bayerwerk (DE)**

(72) Erfinder: **Buding, Hartmuth, Dr.**
**Liebermannstrasse 1**
**D-4047 Dormagen (DE)**
Erfinder: **Szentivanyi, Zsolt, Dr.**
**Carl-Rumpff-Strasse 9**
**D-5090 Leverkusen (DE)**
Erfinder: **Thörmer, Joachim, Dr.**
**Emil-Nolde-Strasse 39**
**D-5090 Leverkusen (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 174 551 B1

## Beschreibung

Die Erfindung betrifft niedermolekulare, teilweise oder vollständig hydrierte Copolymerisate aus Dien- und Nitrilmonomeren und daraus mit nitrilgruppenhaltigen Elastomeren durch gemeinsame Vernetzung hergestellte Covulkanisate.

Flüssige (niedermolekulare), statistisch aufgebaute Copolymerisate aus Dien- und Vinylmonomeren, hergestellt durch Emulsions- oder Lösungspolymerisation, sind z.B. aus US—PS 2 469 132, 3 099 650 und 3 551 472 bekannt. Diese Copolymerisate enthalten entsprechend ihrem Dienanteil noch Doppelbindungen.

Es wurde nun gefunden, daß eine teilweise oder vollständige Hydrierung dieser Doppelbindungen zu Produkten mit überraschend vorteilhaften Eigenschaften führt.

Gegenstand der Erfindung sind daher statistische Copolymerisate, die aus 85 bis 52 Gew.-%, bevorzugt 82 bis 66 Gew.-% zumindest einem konjugierten Dien, 15 bis 48 Gew.-%, bevorzugt 18 bis 34 Gew.-%, zumindest einem ungesättigten Nitril und 0 bis 10 Gew.-% zumindest einem mit Dien und ungesättigtem Nitril copolymerisierbaren weiteren Monomeren aufgebaut sind und ein mittleres Molekulargewicht (Zahlenmittel) von 0,5 bis 30 kg/mol, bevorzugt 0,8 bis 5,0 kg/mol sowie einen Hydrierungsgrad der Doppelbindungen von mehr als 80%, bevorzugt mehr als 95%, insbesondere mehr als 99% aufweisen.

Die Hydrierung ungesättigter Kautschuke ist allgemein bekannt und beispielsweise in US—PS 3 700 637, DE—OS 2 539 132, DE—OS 2 913 992 und DE—OS 3 046 008 beschrieben. Nach diesen Methoden bleiben die CN-Driefachbindungen der Nitrilgruppen unverändert.

Als konjugierte Diene kommen z.B. Isopren, 2,3-Dimethylbutadien, 1,3-Pentadien und vorzugsweise 1,3-Butadien, als Nitrilmonomere z.B. Methacrylnitril und vorzugsweise Acrylnitril in Frage. Geeignete weitere Monomere sind beispielsweise Acrylsäure, Methacrylsäure, Fumarsäure, Maleinsäure und Itaconsäure und deren Mono- bzw.- soweit möglich—Diester. Bevorzugt ist Methacrylsäure.

Insbesondere wird ein binäres Polymerisat aus Butadien und Acrylnitril verwendet.

Die erfindungsgemäßen Polymerisate haben die überraschende Eigenschaft, Nitrilkautschuken zugemischt und mit diesen covulkanisiert diese in ihrer Ozonbeständigkeit erheblich zu verbessern.

Ein weiterer Gegenstand der Erfindung sind daher Mischungen und daraus durch Vernetzung hergestellte Convulkanisate aus 90 bis 55 Gew.-%, vorzugsweise 70 bis 60 Gew.-%, Butadien-Acrylnitrilcopolymerisaten mit Acrylnitrilgehalten von 18 bis 49 Gew.-% und einer Mindestmooneyviskosität ML 1+4/100°C von 25 Mooneyeinheiten und 10 bis 45 Gew.-%, vorzugsweise 30 bis 40 Gew.-% der vorstehend aufgeführten statistischen, teilweise oder vollständig hydrierten Copolymerisate sowie weiteren üblichen Bestandteilen von Kautschukmischungen, wobei sich die Prozentangaben der Mischungsbestandteile auf die Summe der beiden Mischungskomponenten bezieht.

Die Vernetzung kann sowohl mit Schwefel oder Schwefelspendern oder mit Peroxiden durchgeführt werden. Geeignete Verbindungen sind bekannt.

Vorzugsweise beträgt die Mooney-Viskosität der Butadien-Acrylnitrilcopolymerisate 50 bis 100 ME. Der Acrylnitrilgehalt der Butadien-Acrylnitrilcopolymerisate beträgt vorzugsweise 30 bis 45 Gew.-%.

Übliche Mischungsbestandteile einer Kautschukmischung sind dem Fachmann bekannt; es handelt sich beispielsweise um Füllstoffe, Weichmacher, Alterungsschutzmittel, Verarbeitungshilfsmittel, Pigmente, Säureakzeptoren und Vulkanisationschemikalien, wobei für die Vulkanisation der erfindungsgemäßen Kautschukmischung Peroxide, Schwefel oder Schwefelspender verwendet werden.

An Schwefel werden dabei 0,1 bis 5, vorzugsweise 0,1 bis 1,8 Gew.-%, bezogen auf Polymer, an Schwefelspender 0,2 bis 8, bevorzugt 2 bis 4 Gew.-%, bezogen auf Kautschukfeststoff eingesetzt.

Geeignete Schwefelspender sind beispielsweise Tetraalkylthiuramdisulfide, Cycloalkylalkylthiuramdisulfide, Arylalkylthiuramdisulfide, Tetraalkylthiuramtetrasulfide oder Morpholinyldithiobenzothiazol.

Geeignete Peroxide sind z.B. Dialkylperoxide, Ketalperoxide, Aralkylperoxide, Peroxyether und Peroxyester.

Bevorzugt werden Di-tert.-butylperoxid, Bis-(tert.-butylperoxyisopropyl)-benzol, Dicumylperoxid, 2,5-Dimethyl-2,5-di(tert.-butylperoxy)-hexan, 2,5-Dimethyl-2,5-di-(tert.-butylperoxy)-hexen-(3), 1,1-Bis(tert.-butylperoxy)-3,3,5-trimethylcyclohexan, Benzoylperoxid, tert.-Butylcumylperoxid oder tert.-Butylperbenzoat verwendet.

Die Peroxidmengen betragen 1 bis 15 Gew.-%, vorzugsweise 2 bis 5 Gew.-% bezogen auf Kautschukfeststoff.

Die Covulkanisate eignen sich für alle für Nitrilkautschuk geeigneten Einsatzgebiete, insbesondere jedoch für solche Zwecke, wo es auf eine verbesserte Ozonbeständigkeit ankommt.

Die Molekulargewichte wurden gelpermeationschromatographisch oder dampfdruckosmometrisch bestimmt.

Die Hydriergrade bedeuten, wieviel Prozent der ursprünglich im Polymer vorhandenen C,C-Doppelbindungen hydriert worden sind.

Die Hydrierung kann homogen oder heterogen katalysiert durchgeführt werden.

Für die homogene katalytische Hydrierung benutzt man z.B. Verbindungen der Formel

$$RhX\ (L)_3$$

in der

X für Cl, Br oder J und

L für einen Liganden aus der Gruppe der Organophosphor- und Organoarsenverbindungen steht.

Vorzugsweise wird Triphenylphosphan verwendet.

Zweckmäßigerweise wird in Lösung hydriert, wobei als Lösungsmittel aromatische Kohlenwasserstoffe, die gegebenenfalls chloriert sind, in Frage kommen, z.B. Benzol, Toluol, Xylol, Chlorbenzol, Dichlorbenzol und Methylchlorbenzol, vorzugsweise Chlorbenzol.

Die Konzentration des Polymeren in der Lösung beträgt 1 bis 99 Gew.-%, vorzugsweise 5 bis 50 Gew.-%.

Die Hydrierung wird insbesondere bei 0 bis 180°C, bevorzugt bei 20 bis 160°C, ganz besonders bevorzugt bei 100 bis 145°C, und 1 bis 350 bar Wasserstoffdruck, vorzugsweise 100 bis 250 bar Wasserstoffdruck durchgeführt.

Der Katalysator, berechnet als Rhodium-Metall, wird in Mengen von 10 bis 700 ppm, vorzugsweise von 90 bis 250 ppm, bezogen auf Polymer, eingesetzt.

Für die heterogene katalytische Hydrierung wird Palladium, niedergeschlagen auf einen Träger, wie Ruß, Aktivkohle oder Siliciumdioxid, als Katalysator eingesetzt. Die übrigen Bedingungen bewegen sich innerhalb der für die homogene Katalyse angegebenen Grenzen, wobei Palladium in Mengen bis 10 000 ppm, bezogen auf Polymer, eingesetzt werden kann. Als Lösungsmittel wird vorzugsweise Aceton oder Methylethylketon verwendet.

Beispiel 1

Eine sorgfältig entgaste Lösung von 3 kg eines statistischen Acrylynitril-Butadien-Copolymerisates, hergestellt durch Emulsionspolymerisation, mit 29 Gew.-% Acrylnitrilgehalt und einem mittleren Molekulargewicht (Zahlenmittel) von 1,7 kg/mol (gelpermeationschromatographische bestimmt) in 27 kg Chlorbenzol und eine sorgfältig entgaste Lösung von 4,5 g Tris-(triphenylphosphan)rhodium (I)-chlorid in 2 kg Chlorbenzol wurden in einem mit Stickstoff inertisierten 40 1-Autoklaven vorgelegt. Man tauschte das Intergas gegen Wasserstoff aus und hydrierte 4 Stunden bei 120°C und 150 bar. Das Chlorbenzol wurde mit einem Dünnschichtverdampfer in Vakuum entfernt. Der Hydrierungsgrad betrug 99.6% (IR-spektroskopisch bestimmt).

Beispiel 2

Eine Lösung von 9,1 g eines schwefelfreien, statistischen Acrylnitril-Butadien-Copolymerisates, hergestellt in Toluol mit 2,2'-Azo-bis-isobutyronitril bei 119°C nach einem Zulaufverfahren, mit 26,7 Gew.-% Acrylnitrilgehalt und einem mittleren Molekulargewicht (Zahlenmittel) von 1,4 kg/mol (dampfdruckosmometrisch bestimmt) in 365 g Methylethylketon und 1,82 g Katalysator (5 Gew.-% Pd auf Kohle) wurden in einem 0,7 1 Autoklaven vorgelegt. Der Autoklav wurde mehrmals mit Stickstoff gespült. Dann hydrierte man 4 Stunden bei 140°C und 100 bar Wasserstoffdruck. Man zentrifugierte den Katalysator ab. Der Hydrierungsgrad betrug 97,3% (IR-spektroskopisch bestimmt).

Beispiel 3

Die nachfolgenden Mischungen (Gew.-Teile) wurden auf einer auf 155°C erwärmten Laborwalze in 15 Minuten hergestellt.

| | Mischungen | |
|---|---|---|
| | A | B |
| Polymer I | 65 | 65 |
| Polymer II | 35 | — |
| Polymer III | — | 35 |
| Vinylsilan | 2,0 | 2,0 |
| Ca-silikat | 50,0 | 50,0 |
| Mg-oxid | 3,0 | 2,0 |
| Zn-oxid | 2,0 | 2,0 |
| Stearinsäure | 1,0 | 1,0 |
| Schwefel (80 gew.-%ig) | 0,2 | 0,2 |
| Tetramethylthiuramdisulfid | 2,0 | 2,0 |
| 2-(4-Morpholinyldithio)-benzthiazol | 1,0 | 1,0 |

| | Mischungen A | B |
|---|---|---|
| Mooneyviskosität ML 1+4/100°C (ME) | 34 | 33 |
| Vulkameter $t_{10}$ (min) | 2,6 | 2,1 |
| 180° $t_{90}$ (min) | 7,3 | 5,0 |
| Vulkanisation 180°C, 10 Minuten, Normring I | | |
| Zugfestigkeit (MPa) | 7,3 | 4,3 |
| Bruchdehnung (%) | 380 | 650 |
| Härte 23°C (Shore A) | 44 | 47 |
| Compression Set 125°C/70 h (%) | 61 | 82 |
| Modul bei 100% Dehnung (MPa) | 0,8 | 1,0 |
| Ozon-Alterung 50 pphm $O_3$, 20°C, 45% rel. Feuchte | | |
| Rißbildungsbeginn bei 100% Dehnung (Stunden) | 24 | 168 |

Polymer I ist ein Butadien-Acrylnitrilcopolymerisat mit 34 Gew.-% Acrylnitrilgehalt und einer Mooney-Viskosität ML 1+4/100°C von 65 ME.

Polymer II ist ein Butadien-Acrylnitrilcopolymerisat mit 29 Gew.-% Acrylnitrilgehalt und einem mittleren Molekulargewicht (Zahlenmittel) von 1,7 kg/mol.

Polymer III ist ein hydriertes Butadien-Acrylnitrilcopolymerisat mit einem Acrylnitrilgehalt von 28 Gew.-%, einem mittleren Molekulargewicht (Zahlenmittel) von 2,4 kg/mol und einem Hydrierungsgrad von 99,6%.

**Patentansprüche**

1. Statistische Copolymerisate aus 85 bis 52 Gew.-% zumindest einem konjugierten Dien, 15 bis 48 Gew.-% zumindest einem ungesättigten Nitril und 0 bis 10 Gew.-% zumindest einem mit Dien und Nitril copolymerisierbaren, weiteren Monomeren, die ein mittleres Molekulargewicht (Zahlenmittel) von 0,5 bis 30 kg/mol und einen Hydrierungsgrad der Doppelbindungen von mehr als 80% aufweisen.

2. Mischungen aus 90 bis 55 Gew.-% Butadien-Acrylnitrilcopolymerisaten mit Acrylnitrilgehalten von 18 bis 49 Gew.-% und einer Mindestmooneyviskosität ML 1+4/100°C von 25 ME und 10 bis 45 Gew.-% statistischer Copolymerisate gemäß Anspruch 1.

3. Covulkanisate aus den Mischungen gemäß Anspruch 2, hergestellt durch peroxidische oder Schwefel-Vernetzung.

**Revendications**

1. Copolymères statistiques de 85 à 52% en poids d'au moins un diène conjugué, 15 à 48% en poids d'au moins un nitrile insaturé et 0 à 10% en poids d'au moins un autre monomère copolymérisable avec le diène et le nitrile, avec un poids moléculaire moyen (moyenne en nombre) de 0,5 à 30 kg/mole, et un taux d'hydrogénation des doubles liaisons supérieur à 80%.

2. Mélanges de 90 à 55% en poids de copolymères butadiene-acrylonitrile à des teneurs en acrylonitrile de 18 à 49% en poids, viscosité minimale Mooney ML 1+4/100°C 25 UM, et de 10 à 45% en poids de copolymères statistiques selon la revendication 1.

3. Vulcanisats mélangés des mélanges selon la revendication 2, obtenus par réticulation aux peroxydes ou au soufre.

**Claims**

1. Statistical copolymers of 85 to 52% by weight of at least one conjugated diene, 15 to 48% by weight of at least one unsaturated nitrile and 0 to 10% by weight of at least one other monomer copolymerizable

with diene and nitrile which have an average molecular weight (number average) of from 0.5 to 30 kg/mol and a degree of hydrogenation of the double bonds of more than 80%.

2. Mixtures of 90 to 55% by weight butadiene/acrylonitrile copolymers having acrylonitrile contents of 18 to 49% by weight and a minimum Mooney viscosity ML 1+4/100°C of 25 MU and 10 to 45% by weight of the statistical copolymers claimed in claim 1.

3. Covulcanizates of the mixtures claimed in claim 2, produced by peroxidic or sulfur crosslinking.